# EUROPEAN PATENT SPECIFICATION

(11) **EP 4 628 744 B1**
(45) Date of publication and mention of the grant of the patent: **25.11.2026**
(21) Application number: 24744130.6
(22) Date of filing: 10.01.2024
(51) Int. Cl.: F16D 65/092, F16D 65/16, F16D 66/00, G01L 5/28, F16D 59/02

(54) **DISC BRAKE**
SCHEIBENBREMSE
FREIN À DISQUE

(30) Priority: 17.01.2023 CN 202310057671
(43) Date of publication of application: 08.10.2025
(73) Proprietor: Shijiazhuang Wulong Brake Co., Ltd., Shijiazhuang, Hebei 050000 (CN)
(72) Inventor: HAN, Zhengfang, Shijiazhuang, Hebei 050000 (CN); QIN, Aiguo, Shijiazhuang, Hebei 050000 (CN); HAN, Wulin, Shijiazhuang, Hebei 050000 (CN)
(74) Representative: Bayramoglu et al.
(86) International application number: PCT/CN2024/071474
(87) International publication number: WO 2024/152954

(56) References cited:
- EP-A1- 0 798 259
- WO-A1-2006/033149
- CN-A- 106 678 209
- CN-A- 113 374 816
- CN-A- 113 374 816
- CN-A- 116 221 303
- CN-U- 207 437 628
- CN-U- 212 536 488
- CN-U- 215 444 858
- CN-Y- 2 495 000
- DE-B3- 102013 219 878
- JP-A- 2008 039 107

## Description

### TECHNICAL FIELD

The present disclosure relates to an electromagnetic brake, and in particular to a disc brake capable of real-time detection of brake torque.

### BACKGROUND TECHNOLOGY

The brake torque of a motor brake used in mechanical equipment such as wind turbines will gradually decrease or fail with wear and tear. Wind turbines are generally installed in remote mountainous areas, deserts, mountains or seas, and the core power generation device is usually provided at the top of the wind turbine tower, which poses great difficulties and high costs for equipment maintenance. Therefore, effective maintenance has become a major challenge for wind turbines.

CN113374816A discloses a brake friction detection device for a disc brake, which structurally includes a disc claw clutch type wheel direction micro-motion mechanism and a pull pressure sensor. The disc claw clutch type wheel direction micro-motion mechanism includes a positioning disc provided on a motor, a torque transmission disc close to a motor brake disc, and a ball bearing provided between the positioning disc and the torque transmission disc. Protrusions and grooves respectively arranged on disc surfaces of the positioning disc and the torque transmission disc form a clearance fit, allowing the torque transmission disc to implement wheel direction micro-motion when the brake brakes. The pull pressure sensor includes an elastic body and a resistance strain gauge attached to the elastic body. The elastic body includes one end connected to the positioning disc through a pin shaft and the other end connected to the torque transmission disc through a pin shaft. The brake friction detection device achieves wheel direction micro-motion of the torque transmission disc through the fit between the protrusions and grooves arranged on the disc surfaces of the positioning disc and the torque transmission disc that come into contact with each other. In this way, the brake friction detection device achieves transmission of the brake torque and prevents excessive rotation from damaging the pull pressure sensor. The structure is relatively complex, and the protrusions and grooves arranged on the disc surfaces require long processing time and high material consumption, resulting in high production costs and decreased market competitiveness of the detection device.

### CONTENT OF THE INVENTION

An objective of the present disclosure is to provide a disc brake capable of real-time detection of brake torque, in order to solve the problems of complex structure and high processing cost of the brake friction detection device used in existing disc brakes.

The objective of the present disclosure is achieved as follows. A disc brake includes a brake disc located between a fixed disc and an armature of an electromagnet, where a fastening bolt for fixedly mounting the electromagnet sequentially passes through a yoke and the armature of the electromagnet, and the fixed disc; the fastening bolt is sleeved with a positioning sleeve; the positioning sleeve includes one end abutting against the yoke and the other end abutting against the fixed disc; the armature and the positioning sleeve form a sliding fit; a disc surface of the fixed disc is provided with a circle of upwardly protruding edge along a shaft hole; a core hole of a floating disc is sleeved on the upwardly protruding edge; the floating disc is provided with a clamping slot for clamping the positioning sleeve; the clamping slot and the positioning sleeve maintain a clearance fit; a pull pressure sensor includes one end connected to the fixed disc through a shaft and the other end connected to the floating disc through a shaft; and a clearance range between the clamping slot and the positioning sleeve is within a maximum allowable deformation limit of the pull pressure sensor.

Furthermore, a thrust needle roller bearing is provided between the floating disc and the fixed disc.

Furthermore, the floating disc is pressed onto the disc surface of the fixed disc through a compression spring or a spring pressing plate.

Furthermore, the clamping slot is a notch located at a disc edge of the floating disc or a circular hole formed in a disc surface of the floating disc.

Furthermore, an inner wall of a shaft hole of the brake disc is provided with an axial spline, and a spline shaft sleeve connected to a motor output shaft forms a sliding fit with the spline in the shaft hole of the brake disc.

The present disclosure achieves the distance positioning between the electromagnet and the fixed disc on the motor casing by fitting the positioning sleeve onto the fastening bolt. On the other hand, the structure also serves as a rotational limit element for the floating disc, controlling the axial rotation of the floating disc within the deformation limit of the elastic element of the pull pressure sensor. The design ensures that the pull pressure sensor provides accurate and reliable detection data within the normal deformation limit, and can prevent the floating disc from rotating out of limit when the pull pressure sensor breaks and fails, avoiding brake failure and ensuring the safe use of the disc brake.

In the present disclosure, the fixed disc and the floating disc are conventional structures, and their disc surfaces are free from mutually fit protrusions and grooves. The design avoids long processing time and excessive material consumption, simplifies the structure of the disc brake, effectively reduces production costs, and correspondingly improves the market competitiveness of the product.

### DESCRIPTION OF THE DRAWINGS

FIG. 1 is a structural diagram of a disc brake according to the present disclosure;
FIG. 2 is a sectional view taken along direction A-A shown in FIG. 1;
FIG. 3 is a sectional view a taken long direction B-B shown in FIG. 1.
FIG. 4 is a sectional view taken along direction C-C shown in FIG. 3; and
FIG. 5 is a structural diagram showing that a floating disc is pressed by a spring pressing plate.

Reference Numerals: 1. compression spring; 2. floating disc; 3. pull pressure sensor; 4. fixed disc; 5. armature; 6. yoke; 7. positioning sleeve; 8. adjustment pad; 9. thrust needle roller bearing; 10. coil; 11. brake spring; 12. spline shaft sleeve; 13. brake disc; 14. fastening bolt; 15. bolt; 16. spring pressing plate; and 17. nut.

### SPECIFIC IMPLEMENTATIONS

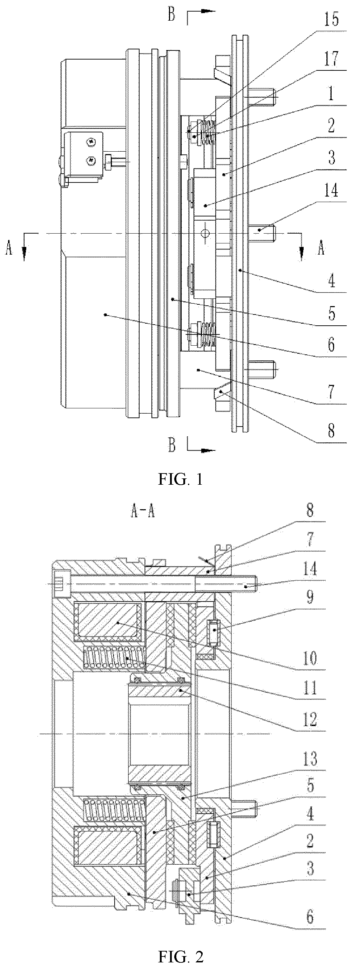

As shown in FIGS. 1, 2, and 3, a release electromagnet of a disc brake includes yoke 6, armature 5, as well as coil 10 and brake spring 11 that are respectively provided in pre-embedding slots of the yoke. Fastening bolt 14 sequentially passes through the yoke 6, the armature 5, positioning sleeve 7, and fixed disc 4 to fix the electromagnet and the fixed disc 4 to a motor casing (not shown in the figure). The positioning sleeve 7 includes one end abutting against the yoke 6 and the other end abutting against the fixed disc 4 to limit a distance between the yoke 6 and the fixed disc 4, ensuring that there is a sufficient movement clearance for brake disc 13. The armature 5 is provided with a through-hole sleeved on an outer circumference of the positioning sleeve 7 and forming a sliding fit with the positioning sleeve 7. The brake disc 13 is provided between the fixed disc 4 and the armature 5. An inner wall of a shaft hole of the brake disc 13 is provided with an axial spline, and spline shaft sleeve 12 connected to a motor output shaft forms a sliding fit with the spline in the shaft hole of the brake disc. One end of the positioning sleeve 7 is provided with adjustment pad 8 for adjusting the movement clearance of the brake disc 13. Two sides of brake disc 13 each are provided with a friction plate for implementing friction braking.

A disc surface at one side of the fixed disc 4 relative to the brake disc is provided with a circle of upwardly protruding edge along the shaft hole. A core hole of floating disc 2 is sleeved on the upwardly protruding edge of the fixed disc 4. Thrust needle roller bearing 9 is provided between the floating disc 2 and the fixed disc 4 to minimize a rotational resistance and rotational friction of the floating disc 2, thereby improving the detection accuracy of the brake friction and the brake torque. The floating disc 2 is pressed onto the disc surface of the fixed disc 4 through a compression spring or a spring pressing plate. Specifically, the elastic pressing of the floating disc can be achieved through one of the following methods.

Method 1: The floating disc 2 is provided with an unthreaded hole. A screw passes through the unthreaded hole of the floating disc and is threaded to a screw hole of the fixed disc 4. A nut of the screw is fit with a washer to press the compression spring 1 onto the disc surface of the floating disc 2.

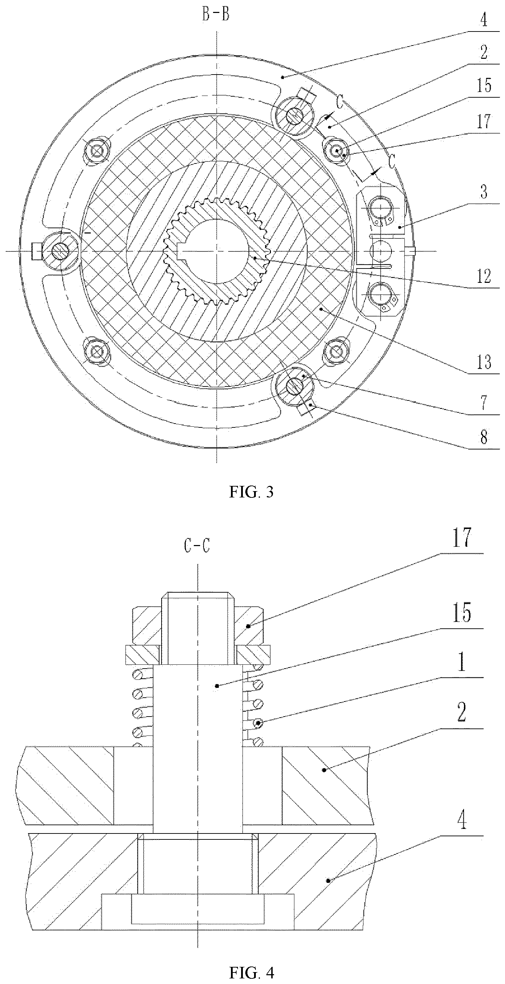

Method 2: As shown in FIG. 4, the floating disc 2 is provided with an unthreaded hole. Bolt 15 passes through a screw hole of the fixed disc and the unthreaded hole of the floating disc 2 from one side of the fixed disc 4, and is exposed from one side of the floating disc. At an exposed end of the bolt, nut 17 is fit with a washer to press the compression spring 1 onto the disc surface of the floating disc 2.

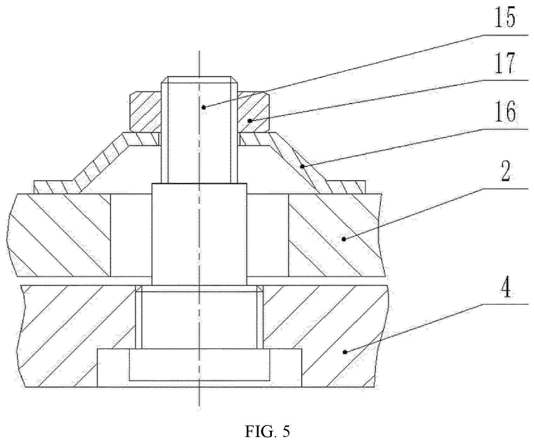

Method 3: As shown in FIG. 5, the floating disc 2 is provided with an unthreaded hole. Bolt 15 passes through a screw hole of the fixed disc and the unthreaded hole of the floating disc 2 from one side of the fixed disc 4, and is exposed from one side of the floating disc. At an exposed end of the bolt, nut 17 is fit with a washer to press spring pressing plate 16 onto the disc surface of the floating disc 2.

In FIG. 1, the floating disc 2 is provided with a clamping slot for clamping the positioning sleeve 7. The clamping slot and the positioning sleeve 7 maintain a clearance fit. The clamping slot of the floating disc 2 can be a notch located at a disc edge of the floating disc or a circular hole formed in the disc surface of the floating disc. A clearance range between the clamping slot and the positioning sleeve 7 is within a maximum allowable deformation range of the pull pressure sensor. The unthreaded hole of the floating disc 2 and the screw/bolt maintain a fit clearance not exceeding the clearance range between the clamping slot and the positioning sleeve.

The pull pressure sensor 3 can adopt a conventional structure, including an elastic element for sensing deformation and a strain gauge attached to the elastic element to detect and transmit a deformation detection signal. As shown in FIG. 1, one end of the pull pressure sensor 3 is connected to the fixed disc 4 through a pin shaft, and the other end of the pull pressure sensor 3 is connected to the floating disc 2 through a pin shaft.

When the coil 10 in the electromagnet loses power, the armature 5 is pressed against the brake disc 13 that rotates with the motor output shaft under the action of the brake spring 11. At this time, the brake disc 13 generates brake friction between the armature 5 and the floating disc 3 through the friction plates located at the two sides of the disc surface of the brake disc. Under the action of the brake friction, the floating disc 2 produces a slight wheel direction rotation. The wheel direction rotation pulls the pull pressure sensor 3, causing a slight deformation. The strain gauge on the pull pressure sensor 3 converts the slight deformation into an electrical signal that reflects the magnitude of the brake friction and outputs it externally, thereby achieving real-time detection of the brake friction of the disc brake. Based on the detected brake friction data and the structural dimensions of the brake disc, the brake torque generated by the braking is calculated according to a torque calculation equation, thereby achieving real-time detection of the brake torque of the disc brake.

## Claims

1. A disc brake, comprising a brake disc (13) located between a fixed disc (4) and an armature (5) of an electromagnet, wherein a fastening bolt (14) for fixedly mounting the electromagnet sequentially passes through a yoke (6) and the armature (5) of the electromagnet, and the fixed disc (4); the fastening bolt (14) is sleeved with a positioning sleeve (7); the positioning sleeve (7) comprises one end abutting against the yoke (6) and the other end abutting against the fixed disc (4); the armature (5) and the positioning sleeve (7) form a sliding fit; a disc surface of the fixed disc (4) is provided with a circle of upwardly protruding edge along a shaft hole; a core hole of a floating disc (2) is sleeved on the upwardly protruding edge; the floating disc (2) is provided with a clamping slot for clamping the positioning sleeve (7); the clamping slot and the positioning sleeve (7) maintain a clearance fit; a pull pressure sensor (3) comprises one end connected to the fixed disc (4) through a shaft and the other end connected to the floating disc (2) through a shaft; and a clearance range between the clamping slot and the positioning sleeve (7) is within a maximum allowable deformation limit of the pull pressure sensor (3).

2. The disc brake according to claim 1, wherein a thrust needle roller bearing (9) is provided between the floating disc (2) and the fixed disc (4).

3. The disc brake according to claim 1, wherein the floating disc (2) is pressed onto the disc surface of the fixed disc (4) through a compression spring (1) or a spring pressing plate (16).

4. The disc brake according to claim 1, wherein the clamping slot is a notch located at a disc edge of the floating disc (2) or a circular hole formed in a disc surface of the floating disc (2).

5. The disc brake according to claim 1, wherein an inner wall of a shaft hole of the brake disc (13) is provided with an axial spline, and a spline shaft sleeve (12) connected to a motor output shaft forms a sliding fit with the spline in the shaft hole of the brake disc (13).

## Patentansprüche

1. Eine Scheibenbremse, umfassend eine Bremsscheibe (13), die zwischen einer feststehenden Scheibe (4) und einem Anker (5) eines Elektromagneten angeordnet ist, wobei ein Befestigungsbolzen (14) zur festen Montage des Elektromagneten nacheinander ein Joch (6) und den Anker (5) des Elektromagneten sowie die feststehende Scheibe (4) durchsetzt; der Befestigungsbolzen (14) mit einer Positionierhülse (7) versehen ist; die Positionierhülse (7) ein Ende, das an dem Joch (6) anliegt, und das andere Ende, das an der feststehenden Scheibe (4) anliegt, umfasst; der Anker (5) und die Positionierhülse (7) eine Gleitpassung bilden; eine Scheibenfläche der feststehenden Scheibe (4) entlang eines Wellenlochs mit einem ringförmigen, nach oben vorstehenden Rand versehen ist; ein Mittelloch einer schwimmenden Scheibe (2) auf den nach oben vorstehenden Rand aufgesteckt ist; die schwimmende Scheibe (2) mit einem Klemmschlitz zum Einklemmen der Positionierhülse (7) versehen ist; der Klemmschlitz und die Positionierhülse (7) eine Spielpassung aufrechterhalten; ein Zug-Druck-Sensor (3) ein Ende, das über eine Welle mit der feststehenden Scheibe (4) verbunden ist, und das andere Ende, das über eine Welle mit der schwimmenden Scheibe (2) verbunden ist, umfasst; und ein Spielbereich zwischen dem Klemmschlitz und der Positionierhülse (7) innerhalb einer maximal zulässigen Verformungsgrenze des Zug-Druck-Sensors (3) liegt.

2. Scheibenbremse nach Anspruch 1, wobei zwischen der schwimmenden Scheibe (2) und der feststehenden Scheibe (4) ein Axialnadellager (9) vorgesehen ist.

3. Scheibenbremse nach Anspruch 1, wobei die schwimmende Scheibe (2) durch eine Druckfeder (1) oder eine Federdruckplatte (16) auf die Scheibenfläche der feststehenden Scheibe (4) gedrückt wird.

4. Scheibenbremse nach Anspruch 1, wobei der Klemmschlitz eine Aussparung ist, die sich an einem Scheibenrand der schwimmenden Scheibe (2) befindet, oder ein kreisförmiges Loch, das in einer Scheibenfläche der schwimmenden Scheibe (2) ausgebildet ist.

5. Scheibenbremse nach Anspruch 1, wobei eine Innenwand eines Wellenlochs der Bremsscheibe (13) mit einer axialen Keilverzahnung versehen ist und eine mit einer Motorausgangswelle verbundene Keilwellenhülse (12) mit der Keilverzahnung in dem Wellenloch der Bremsscheibe (13) eine Gleitpassung bildet.

## Revendications

1. Frein à disque, comprenant un disque de frein (13) situé entre un disque fixe (4) et une armature (5) d'un électroaimant, dans lequel un boulon de fixation (14) pour monter de manière fixe l'électroaimant passe en séquence à travers un attelage (6) et l'armature (5) de l'électroaimant, et le disque fixe (4) ; le boulon de fixation (14) est emmanché sur un manchon de positionnement (7) ; le manchon de positionnement (7) comprend une extrémité venant en butée contre l'attelage (6) et l'autre extrémité venant en butée contre le disque fixe (4) ; l'armature (5) et le manchon de positionnement (7) forment un ajustement coulissant ; une surface de disque du disque fixe (4) est pourvue d'un bord saillant vers le haut de forme circulaire le long d'un trou d'arbre ; un trou central d'un disque flottant (2) est emmanché sur le bord saillant vers le haut ; le disque flottant (2) est pourvu d'une fente de serrage pour le serrage du manchon de positionnement (7) ; la fente de serrage et le manchon de positionnement (7) maintiennent un ajustement avec jeu ; un capteur de pression de traction (3) comprend une extrémité reliée au disque fixe (4) à travers un arbre et l'autre extrémité reliée au disque flottant (2) à travers un arbre ; et une plage de jeu entre la fente de serrage et le manchon de positionnement (7) est dans la limite de déformation admissible maximale du capteur de pression de traction (3).

2. Frein à disque selon la revendication 1, dans lequel un roulement à aiguilles axial (9) est ménagé entre le disque flottant (2) et le disque fixe (4).

3. Frein à disque selon la revendication 1, dans lequel le disque flottant (2) est pressé contre la surface de disque du disque fixe (4) au moyen d'un ressort de compression (1) ou d'une plaque d'appui à ressort (16).

4. Frein à disque selon la revendication 1, dans lequel la fente de serrage est une entaille située au niveau d'un bord de disque du disque flottant (2) ou d'un trou circulaire formé dans une surface de disque du disque flottant (2).

5. Frein à disque selon la revendication 1, dans lequel une paroi interne d'un trou d'arbre du disque de frein (13) est pourvue d'une cannelure axiale, et un manchon d'arbre cannelé (12) relié à un arbre de sortie de moteur forme un ajustement coulissant avec la cannelure dans le trou d'arbre du disque de frein (13).
